# EUROPEAN PATENT APPLICATION

(11) **EP 4 818 015 A1**
(43) Date of publication of application: **07.10.2026**
(21) Application number: 26158026.0
(22) Date of filing: 12.02.2026
(51) Int. Cl.: B62J 9/25, B62J 9/27, B62J 7/08, B62J 11/00, F16M 11/04

(54) **ADAPTER FOR ATTACHING OBJECTS TO A VEHICLE**

(30) Priority: 04.04.2025 IT 202500007296
(71) Applicant: Shenzhen Loboo Motor Accessories Co., Ltd, Shenzhen, Guangdong (CN)
(72) Inventor: YANG, Lei, Shenzhen (CN)
(74) Representative: Pizzoli, Antonio Mario

(57) **Abstract**

An adapter (1) for attaching an object (4) to a vehicle (8), which adapter (1) comprises at least one upper part (2) and at least one lower part (3), wherein the upper part (2) is configured to be attached to an object (4) and the lower part (3) is configured to be attached to a portion (7) of a vehicle (8), wherein the upper part (2) comprises at least two attachment devices that can be moved in opposite directions relative to each other to attach the upper part (2) to the lower part (3) in a removable manner, wherein each attachment device comprises at least one catch element (20), wherein the upper part (2) is moved toward the lower part (3) along at least one attachment direction (A) to attach the upper part (2) to the lower part (3), wherein the catch element (20) protrudes from the inside toward the outside of the upper part (2), wherein when the upper part (2) is attached to the lower part (3), the catch element (20) attaches to the lower part (3) from the inside towards the outside of the lower part (3) and is partially housed in a seat (30) of the lower part (3) which is open towards the inside of the lower part (3).

## Description

### Technical field

The present description relates to an adapter that can be used to attach objects to a vehicle, in particular to attach a bag to the tank of a motorcycle.

### Background of the description

EP 2289783 and EP 3819198 describe adapters comprising a dedicated release mechanism that can be manually operated by a user to release the upper part from the lower part. These known adapters are relatively complex to manufacture and use, and are therefore relatively expensive, bulky and unreliable, precisely because of their complexity.

US 2015/0201723 A1 describes an adapter according to the preamble of claim 1.

### Summary of the description

The object of the present description is therefore to provide an adapter that solves those problems. This object is achieved with an adapter, the main characteristics of which are specified in the attached claims, to be considered an integral part of the present description.

Thanks to the particular arrangement of the catch elements, which protrude from the inside towards the outside of the upper part, and of the respective seats, which are open towards the inside of the lower part, in a manner opposite to the catch elements and seats of the adapters of EP 2289783 and EP 3819198, at least one housing of the upper part of the adapter according to the present description can be arranged inside the lower part, so as to simplify the structure and reduce the dimensions of the adapter.

The adapter is preferably provided with a particular mechanism that allows not only the automatic attachment but also the automatic release of the upper part from the lower part, so that a user can grasp and pull along a particular release direction a handle of the object, in particular of a bag, fixed to the upper part to separate the upper part from the lower part without having to manually operate release mechanisms, as is instead the case in the adapters of EP 2289783 and EP 3819198. This arrangement increases the simplicity of manufacture and use of the adapter according to the present description.

The adapter is preferably provided with a particular magnetic system that improves the stability of the attachment while allowing easy release of the object when pulled in the release direction, especially if the seats of the lower part are provided with special edges and/or notches that improve both the attachment and release of the upper part.

The lower part is preferably provided with detachable extensions, so as to improve the adaptability of the adapter to different types of vehicles.

The adapter according to the present description also includes additional features that offer numerous advantages in terms of simplicity of manufacture, production costs, reliability over time and safety in use compared to the adapters of EP 2289783 and EP 3819198.

### Brief description of the drawings

Further advantages and features of the adapter according to the present description will be apparent to those skilled in the art from the following detailed description of some embodiments, to be considered non-limiting examples of the claims, with reference to the attached drawings in which:
- figure 1 is an axonometric top view of a bag comprising an embodiment of the adapter;
- figure 2 is a top view of the bag in figure 1;
- figure 3 is a bottom view of the bag in figure 1;
- figure 4 is an exploded top axonometric view of the bag in figure 1;
- figure 5 is an exploded bottom axonometric view of the bag in figure 1;
- figure 6 is a bottom view of the top of the adapter;
- figure 7 is a bottom axonometric view of the top of the adapter;
- figure 8 is a top view of the adapter;
- figure 9 is a bottom axonometric view of the adapter;
- figure 10 is an enlarged top axonometric view of the bottom of the adapter;
- figure 11 is an enlarged and partially sectioned view of the upper part of figure 7;
- figure 12 is an enlarged and partially sectioned view of the lower part of figure 10;
- figure 13 is an enlarged and partially sectioned view of the adapter of figure 9;
- figure 14 is an enlarged bottom axonometric view of an extension of the lower part of figure 10;
- figure 15 is an enlarged top axonometric view of another extension of the lower part of figure 10;
- figure 16 is an axonometric top view of the extension of figure 15 with the catch elements;
- figure 17 is a side view of the extension of figure 15 with the catch elements;
- figure 18 is a top view of the extension of figure 15 with the catch elements;
- figure 19 is a side view of the bag of figure 1 when attached to the tank of a motorcycle;
- figure 20 is a side view of the bag of figure 1 when removed from said tank.

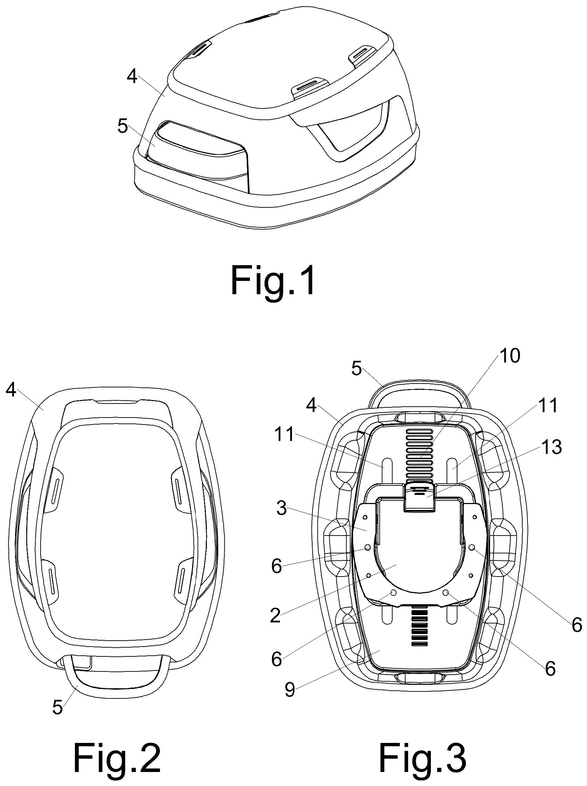

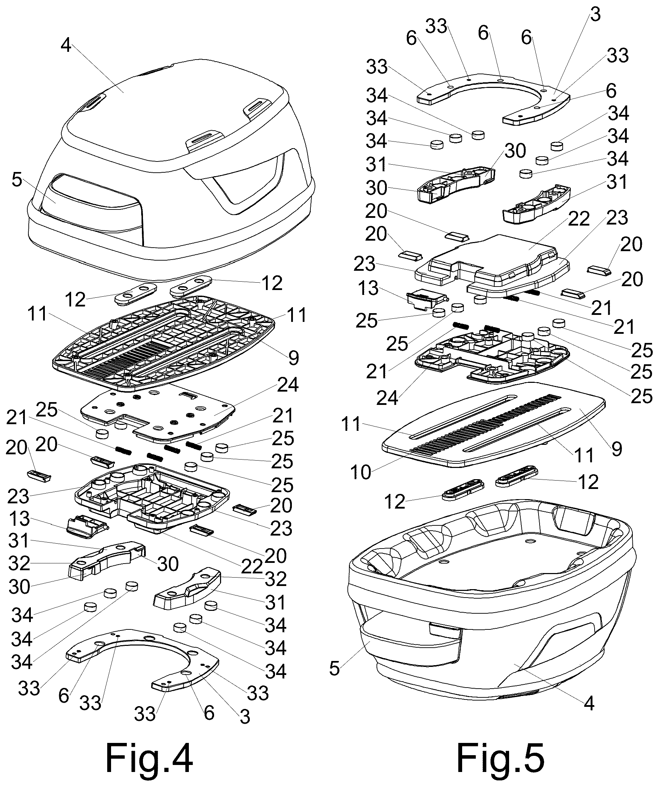

Figures 1-20 show a preferred embodiment of the adapter 1, which comprises at least one upper part 2 and at least one lower part 3. The upper part 2 comprises attachment devices for attaching the upper part 2 to the lower part 3 in a removable manner. The upper part 2 is configured to be fixed to an object 4, in particular to a bag 4 provided with at least one handle 5 or other objects such as electronic and/or mechanical devices.

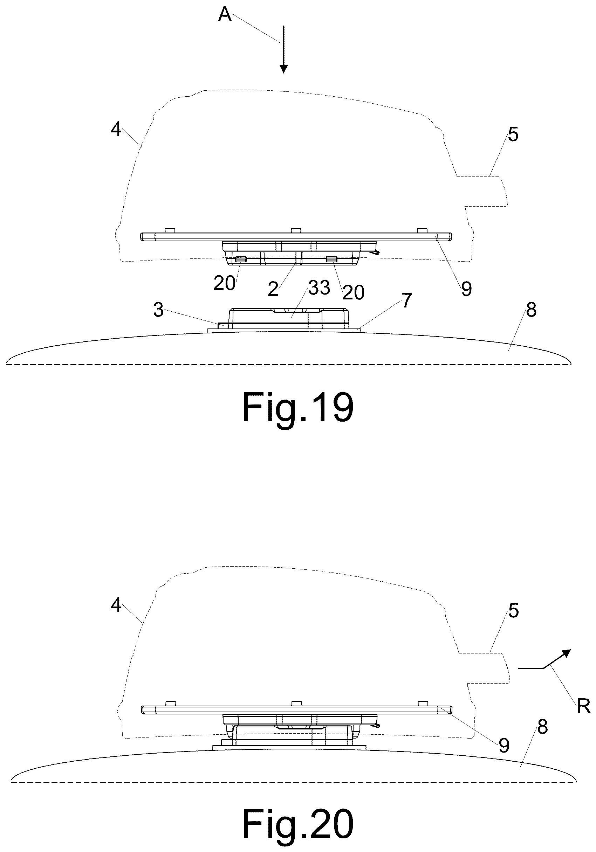

Preferably, the lower part 3 has a substantially horseshoe shape and has a plurality of holes 6 which serve to fix the lower part 3 to a portion 7 of a vehicle 8, in particular to the frame 7 of a cap of a tank 8 of a motorcycle, as shown in figures 19 and 20, or to other portions of vehicles such as internal or external surfaces of a motor vehicle.

Figure 19 shows an attachment direction A, in particular substantially vertical, for attaching the upper part 2 to the lower part 3 and figure 20 shows a release direction R for removing the upper part 2 from the lower part 3. The release direction R may comprise a first portion that is substantially perpendicular to the attachment direction A and a second portion that forms an angle of 45°-90° with the first portion. The attachment direction A may be substantially vertical in the case of a bag 4 to be attached to a tank 8 of a motorcycle. The bag 4 may be removed from the tank 8 by pulling the handle 5, so that the upper part 2 moves in the release direction 2 relative to the lower part 3.

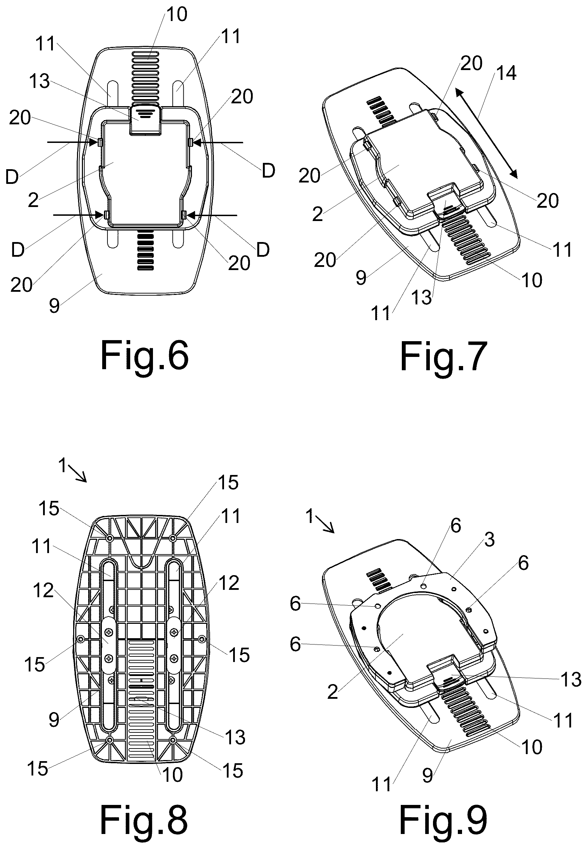

The adapter 1 may comprise a support plate 9 that is configured to be fixed to the object 4, in particular to a lower side of the bag 4, wherein the upper part 2 is slidably connected to the support plate 9. To this purpose, the support plate 9 may comprise a rack 10 and one or more slits 11. The upper part 2 may comprise one or more cursors 12 that can slide along the slits 11 and a hook 13 that is hinged to the upper part 2 and is configured to be releasably locked onto a portion of the rack 10, so that a user can release the hook 13 from the rack 10 to move the upper part 2 (along the direction of the arrow 14 of figure 7) with respect to the support plate 9 to adjust the position of the object 4 with respect to the motor vehicle 8. The support plate 9 may be attached to the object 4 by screws inserted into holes made in the object 4 and in threaded holes 15 of the support plate 9.

To attach the upper part 2 to the lower part 3, the upper part 2 comprises at least two attachment devices, in particular two pairs of attachment devices which are displaceable in opposite directions relative to each other, wherein each attachment device comprises at least one catch element 20, in particular protruding from the inside towards the outside of the upper part 2. When the upper part 2 is moved towards the lower part 3 along the attachment direction A, the catch elements 20 are displaced towards each other along retraction directions D (shown in figure 6), in particular substantially perpendicular to the attachment direction A and to the first portion of the release direction R. When the upper part 2 is attached to the lower part 3, the catch elements 20 engage with the lower part 3 from the inside towards the outside of the lower part 3. For this purpose, the attachment devices of the upper part 2 comprise elastic means 21, in particular helical springs, which push the catch elements 20 towards the outside of the upper part 2. The upper part 2 preferably comprises a housing 22 which houses the elastic means 21 and a portion of the catch elements 20. Preferably, the housing 22 is provided with extensions 23 which extend laterally from the housing 22 and is closed by a cover 24. Preferably, the extensions 23 of the upper part 2 are made in one piece with the housing 22 and/or comprise one or more magnets 25, in particular three magnets 25 in each extension 23.

When the upper part 2 is attached to the lower part 3, the catch elements 20 are partially housed in corresponding seats 30 of the lower part 3 which are open towards the inside of the lower part 3, in particular towards the housing 22 of the upper part 2. The seats 30 of the lower part 3 may be formed in one or more extensions 31 of the lower part 3, in particular two extensions 31, which have an elongated shape and are arranged on at least two sides of the lower part 3. The housing 22 of the upper part 2 is preferably arranged between two extensions 31 of the lower part 3. The extensions 31 may be made in one piece with the lower part 3 or may preferably be separate pieces, which are fixed to the lower part 3, for example by screws inserted into holes 32, 33 made in the extensions 31 and in the lower part 3 respectively. Thus, the extensions 31 themselves may be fixed to a lower part 3 selected from several lower parts configured to be fixed to a specific portion 7 of a specific motor vehicle 8, in particular to a specific fuel cap 7 of a specific motorcycle. Each extension 31 of the lower part 3 may comprise two or more seats 30, in particular two seats 30 open on the same side of the extension 31 facing an opposite extension 31. Preferably, the external profiles of the extensions 23 of the upper part 2 are substantially the same as the external profiles of the extensions 31 of the lower part 3. Preferably, the extensions 31 of the lower part 3 comprise one or more magnets 34, in particular three magnets 34 in each extension 31.

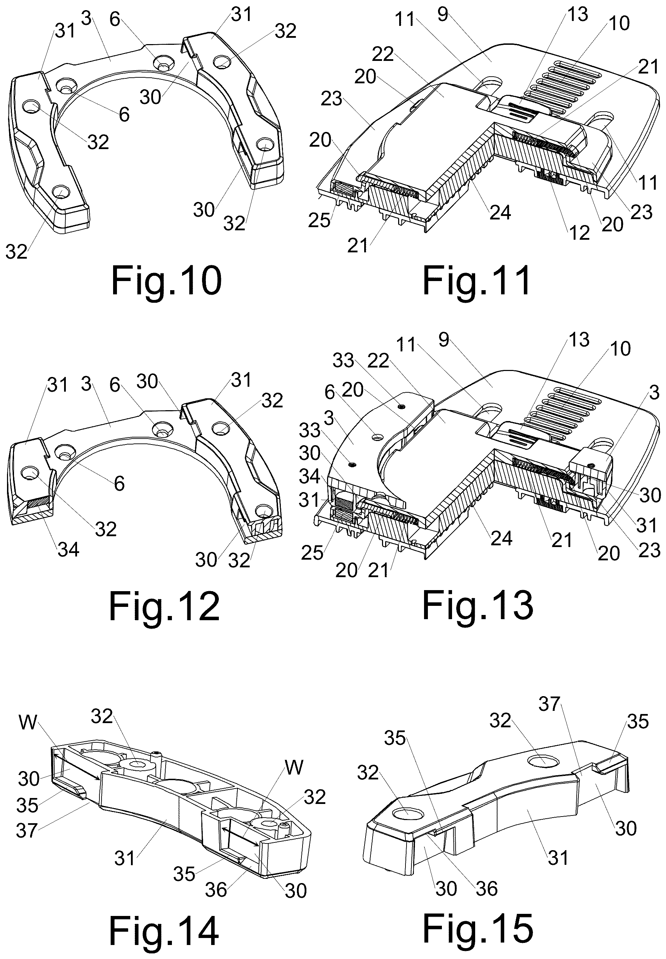

As shown in figure 13, the magnets 25 of the upper part 2 are arranged adjacent to the magnets 34 of the lower part 3 when the upper part 2 is attached to the lower part 3, so that these magnets 25, 34 are attracted to each other and oppose a movement of the upper part 2 relative to the lower part 3.

As shown in figures 14 and 15, the seats 30 of the lower part 3 comprise a first edge 35 which is configured to come into contact with a portion of a catch element 20 when the upper part 2 is moved towards the lower part 3 along the direction of attachment A, so that, as a result of this contact, the first edge 35 pushes the catch element 20 along the respective retraction direction D against the force of the elastic means 21 to at least partially retract the catch element 20 inside the upper part 2, in particular inside the housing 22.

The outer surfaces of the first edges 35 and the surfaces of the catch elements 20 that come into contact with each other when the upper part 2 is moved towards the lower part 3 along the attachment direction A are preferably inclined, in particular at an angle of 30°-60°, so as to convert a force acting along the attachment direction A into a force acting along the retraction direction D. The inner surfaces of the first edges 35 and the surfaces of the catch elements 20 that may come into contact with each other when the upper part 2 is attached to the lower part 3, i.e. when portions of the catch elements 20 are in the seats 30, are preferably substantially parallel, so as to prevent the removal of the lower part 3 from the upper part 2 if the upper part 2 is moved away from the lower part 3 in a direction substantially opposite to the attachment direction A.

Preferably, the width W of at least one of the seats 30 is at least twice the width of the catch element 20 to be arranged in this seat 30, wherein this seat 30 comprises a second edge 36 or a notch 37 which are aligned with the first edge 35 of the same seat 30, so that the catch element 20 can move in this seat 30 along its width W from the first edge 35 to the second edge 36 or the notch 37 and be released from the seat 30 through the second edge 36 or the notch 37 when the upper part 2 is removed from the lower part 3 in the first portion of the release direction R. For this purpose, the inner surface of the second edge 36 which contacts the surface of the catch elements 20 when the upper part 2 is removed from the lower part 3 along the second portion of the release direction R is preferably inclined, in particular at an angle of 30°-60°, so as to convert the force acting along the second portion of the release direction R into a force acting along the retraction direction D. The notches 37 of the lower part 3 allow the release of the catch elements 20 from their seats 30 when the upper part 2 is moved away from the lower part 3 along the second portion of the release direction R.

In particular, the extensions 31 comprise a first seat 30, which is provided with a first edge 35 and a second edge 36, and a second seat 30, which is provided with a first edge 35 and a notch 37, wherein these two first edges 35, the second edge 36 and the notch 37 are substantially aligned with each other.

The magnets 25, 34 of the upper part 2 and of the lower part 3 oppose the movement of the upper part 2 with respect to the lower part 3 along the width W of the seats 30 and/or along the first portion of the release direction R.

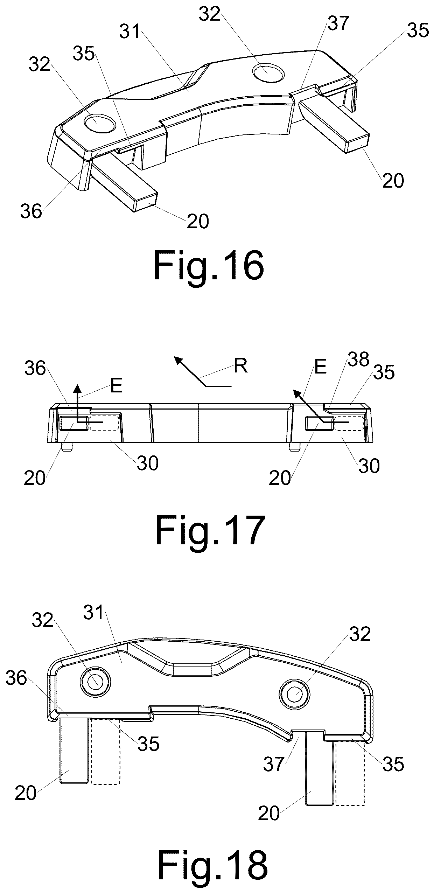

As shown in figures 17 and 18, when the upper part 2 is moved away from the lower part 3 along the first portion of the release direction R, the catch elements 20 of the upper part 2 move inside the seats 30 from a locked position (shown with dotted lines in the figure), in which the magnets 25, 34 of the upper part 2 and the lower part 3 are at the shortest distance and in which the catch elements 20 are completely arranged under the first edges 35, to an intermediate position, in which a first catch element 20 has reached one end of its first seat 30, so that the first catch element 20 is completely arranged under the second edge 36 while the second catch element 20 is partially arranged under the notch 37. In this intermediate position, the second catch element 20 is still arranged under an end portion 38 of the first edge 35, which is preferably tapered towards the notch 37. When the upper part 2 is moved away from the lower part 3 along the second portion of the release direction R, the first catch element 20 passes through the second edge 36 and the second catch element 20 passes through the notch 37, guided by the end portion 38 of the first edge 35, so that the catch elements 20 move along extraction directions E towards an unlocking position of the upper part 2 from the lower part 3.

Thus, the upper part 2 can be automatically attached to the lower part 3 when the upper part 2 is moved towards the lower part 3 along the at least one attachment direction A, and/or the upper part 2 can be automatically released from the lower part 3 when the upper part 2 is moved with respect to the lower part 3 along the release direction R.

Variations or additions may be made by those skilled in the art to the embodiments described and illustrated herein, while remaining within the scope of the following claims. In particular, further embodiments may comprise the technical characteristics of one of the following claims with the addition of one or more technical characteristics described in the specification or illustrated in the drawings, taken individually or in any mutual combination and comprising their equivalent characteristics.

Furthermore, the terms used in the text and/or drawings are to be understood as inclusive terms, unless otherwise specified, so for example the terms "a", "comprising", "including a", "having two" or "provided with" mean respectively "at least one", "comprising, but not limited to", "including at least one", "having two or more" or "provided with at least one".

Angles, proportions and values cited in the specification and/or shown in the drawings include a tolerance of at least 5% unless otherwise specified.

## Claims

1. An adapter (1) for attaching an object (4) to a vehicle (8), which adapter (1) comprises at least one upper part (2) and at least one lower part (3), wherein the upper part (2) is configured to be attached to an object (4) and the lower part (3) is configured to be attached to a portion (7) of a vehicle (8), wherein the upper part (2) comprises at least two attachment devices that can be moved in opposite directions relative to each other to attach the upper part (2) to the lower part (3) in a removable manner, wherein each attachment device comprises at least one catch element (20), wherein the upper part (2) is moved towards the lower part (3) along at least one attachment direction (A) to attach the upper part (2) to the lower part (3), wherein the catch element (20) protrudes from the inside towards the outside of the upper part (2), wherein when the upper part (2) is attached to the lower part (3), the catch element (20) attaches to the lower part (3) from the inside towards the outside of the lower part (3) and is partially housed in a seat (30) of the lower part (3) which is open towards the inside of the lower part (3), **characterized in that** the seats (30) of the lower part (3) are formed in one or more extensions (31) of the lower part (3) which have an elongated shape and are arranged on at least two sides of the lower part (3).

2. The adapter (1) according to the preceding claim, wherein when the upper part (2) is moved towards the lower part (3) along the attachment direction (A), the catch elements (20) of the at least two attachment devices are moved towards each other.

3. The adapter (1) according to one of the preceding claims, wherein the lower part 3 has a substantially horseshoe shape and has a plurality of holes (6) configured to fix the lower part (3) to a portion (7) of a vehicle (8).

4. The adapter (1) according to the preceding claim, wherein said one or more extensions (31) are separate pieces which are fixed to the lower part (3).

5. The adapter (1) according to one of the preceding claims, wherein the attachment devices of the upper part (2) comprise elastic means (21) which push the respective catch elements (20) towards the outside of the upper part (2).

6. The adapter (1) according to the preceding claim, wherein the upper part (2) comprises a housing (22) which houses the elastic means (21) and a portion of the catch elements (20) of the attachment devices, wherein the housing (22) is arranged between at least two of said extensions (31) of the lower part (3) when the upper part (2) is attached to the lower part (3).

7. The adapter (1) according to the preceding claim, wherein the housing (22) of the upper part (2) is provided with extensions (23) extending laterally from the housing (22).

8. The adapter (1) according to one of the preceding claims, wherein the upper part (2) and the lower part (3) each comprise one or more magnets (25, 34), wherein the magnets (25) of the upper part (2) are arranged adjacent to the magnets (34) of the lower part (3) when the upper part (2) is attached to the lower part (3), so that these magnets (25, 34) are attracted to each other and oppose a movement of the upper part (2) relative to the lower part (3).

9. The adapter (1) according to the preceding claim, when dependent on claim 7, wherein said magnets (25, 34) are included in the extensions (23, 31) of the upper part (2) and of the lower part (3).

10. The adapter (1) according to one of the preceding claims, wherein the seats (30) of the lower part (3) comprise a first edge (35) which is configured to come into contact with a portion of a catch element (20) when the upper part (2) is moved towards the lower part (3) along the attachment direction (A), so that, as a result of this contact, the first edge (35) pushes the catch element (20) to at least partially retract the catch element (20) inside the upper part (2).

11. The adapter (1) according to the preceding claim, wherein the width (W) of at least one seat (30) of the lower part (3) is at least twice the width of the catch element (20) to be arranged in this seat (30), which comprises a second edge (36) or a notch (37) which are aligned with the first edge (35), so that the catch element (20) can move in the seat (30) along its width (W) from the first edge (35) to the second edge (36) or the notch (37) and be released from the seat (30) through the second edge (36) or the notch (37) when the upper part (2) is removed from the lower part (3).

12. The adapter (1) according to claim 10 or 11, wherein the outer surfaces of the first edges (35) and the surfaces of the catch elements (20) that come into contact with each other when the upper part (2) is moved towards the lower part (3) along the attachment direction (A) are inclined, while the inner surfaces of the first edges (35) and the surfaces of the catch elements (20) that can come into contact with each other when the upper part (2) is attached to the lower part (3) are substantially parallel.

13. The adapter (1) according to one of the preceding claims, wherein the upper part (2) is configured to be moved with respect to the lower part (3) along a release direction (R) to remove the upper part (2) from the lower part (3), wherein at least one first portion of the release direction (R) is substantially perpendicular to the attachment direction (A).

14. The adapter (1) according to the preceding claim, wherein the release direction (R) comprises a second portion forming an angle of 45°-90° with said first portion.

15. The adapter (1) according to one of the preceding claims, wherein the upper part (2) is automatically attached to the lower part (3) when the upper part (2) is moved towards the lower part (3) along the at least one attachment direction (A), and/or wherein the upper part (2) is automatically released from the lower part (3) when the upper part (2) is moved with respect to the lower part (3) along the release direction (R).
